# FASCICULE DE BREVET EUROPEEN

(11) **EP 1 179 157 B1**
(45) Date de publication et mention de la délivrance du brevet: **27.08.2003**
(21) Numéro de dépôt: 99956066.7
(22) Date de dépôt: 17.11.1999
(51) Int. Cl.: F16L 59/14

(54) **CONDUITE CALORIFUGEE POUR LE TRANSPORT DE FLUIDES**
THERMISCH ISOLIERTES ROHR FÜR DEN TRANSPORT VON FLÜSSIGKEITEN
HEAT-INSULATED DUCT FOR TRANSPORTING FLUIDS

(30) Priorité: 30.04.1999 FR 9905509; 06.08.1999 FR 9910266
(43) Date de publication de la demande: 13.02.2002
(73) Titulaire: COFLEXIP, 92973 Paris La Defense (FR)
(72) Inventeur: COUTAREL, Alain, F-76130 Mont-Saint-Aignan (FR)
(74) Mandataire: Bertrand, Didier
(86) Numéro de dépôt international: FR9902818
(87) Numéro de publication internationale: WO00066934

(56) Documents cités:
- WO-A-95/33953
- FR-A- 2 563 608
- GB-A- 1 500 642
- GB-A- 2 049 868
- US-A- 3 804 438

## Description

La présente invention concerne une conduite calorifugée pour le transport de fluides et plus particulièrement une conduite flexible utilisée pour le transport d'hydrocarbures provenant de puits sous-marins.

Il est de plus en plus nécessaire de fortement isoler les conduites flexibles, en raison des conditions d'exploitation des gisements pétroliers exploités en mer ("off shore" en anglais). En effet, les huiles lourdes de ces gisements ont tendance à se figer lors de leur transport entre le puits de production sous-marin et l'équipement de surface tel qu'une plate-forme, par suite des pertes thermiques dans la conduite flexible immergée en mer. Une bonne isolation thermique est également recherchée pour éviter la formation d'hydrates auxquels sont sujets certains pétroles bruts pendant leur refroidissement.

Dans FR-A-2 563 608, il est décrit les solutions antérieures connues. Un des perfectionnements préconisés par FR-A-2 563 608 consisté à disposer, autour du noyau interne de la conduite, une pluralité de cloisons annulaires réparties sur la longueur du noyau et solidaires de ce dernier, à remplir les chambres annulaires, ménagées entre les cloisons successives, par un matériau d'isolation, à extruder une gaine externe en continu sur les cloisons, l'espacement entre deux cloisons consécutives étant compris entre 20 et 200 m, en fonction des conditions de service. Suivant un autre perfectionnement décrit dans ce document, l'isolation thermique est obtenue en spiralant autour du noyau central des tubes creux dont le diamètre est compris entre 5 et 30 mm et d'épaisseur de 0,5 à 4 mm. Dans tous les modes de réalisation, les bandes d'isolation thermique doivent présenter une certaine résistance à la composante circonférentielle ("hoop stress" en anglais) et une certaine résistance mécanique pour pouvoir transmettre les efforts de serrage aux armures de traction. Du fait de l'enroulement à pas court de ces bandes d'isolation thermique, les couches correspondantes ont tendance à se comporter comme des anneaux et elles présentent donc une grande résistance à la déformation radiale, une telle résistance étant appelée par les spécialistes «effet voûte». Lorsqu'on augmente le nombre des couches d'isolation thermique, comme c'est le cas dans les applications grande profondeur, la force transmise aux armures de traction est relativement faible comparée à la force appliquée par les tensionneurs, comme décrit ci-après, ce qui réduit considérablement la capacité du système de pose. L'effet voûte devient important lorsque n Ee³ > 400 Nm où n est le nombre de couches, E le module d'Young et e l'épaisseur d'une couche.

Des conduites avec une telle isolation thermique présentent ce que les spécialistes appellent "l'effet de voûte" et leurs applications sont limitées par le nombre de couches d'isolation thermique. Il est important de noter ou de rappeler que les conduites dites rigides ou flexibles, lorsqu'elles sont déroulées à partir de la ou des bobines réceptrices disposées sur un navire de pose, passent dans des dispositifs appelés tensionneurs qui ont notamment pour but de reprendre une grande partie du poids ou des efforts de traction d'une conduite avant qu'elle ne soit immergée dans l'eau. De tels dispositifs tensionneurs sont bien connus et décrits par exemple dans US-A-4 345 855. Pour que ces tensionneurs jouent pleinement leur rôle, il faut que la force maximale de serrage des tensionneurs soit transmise au moins en grande partie si non en totalité au noyau central de la conduite.

Dans une conduite rigide ou pseudo-rigide, comme c'est le cas des conduites à "voûte externe", la résistance à la transmission de la force d'application des tensionneurs est trop importante et seule une partie de la force d'application est transmise au noyau central, ce qui est insuffisant pour reprendre le poids ou les forces de traction de la conduite.

Dans une conduite isolée thermiquement au moyen de couches superposées de bandes minces enroulées à pas court, c'est-à-dire avec un angle d'enroulement supérieur à 55°, ou dans une conduite du type de celle décrite dans FR-A-2 563 608, la force d'application des tensionneurs déforme de manière très sensible la structure isolante au droit des patins de serrage desdits tensionneurs tout en provoquant un fluage ou expansion de la structure isolante entre les patins, formant ainsi des sortes de bourrelets entre lesdits patins. Les courbes représentant la force transmise (F_{T}) au noyau central en fonction de la force appliquée (F_{P}) par les patins des tensionneurs, pour différentes épaisseurs e d'une structure isolante souple, montrent que plus l'épaisseur e augmente et plus la force transmise (F_{T}) est relativement faible. Mais par ailleurs, si on réalise une structure isolante de faible épaisseur alors l'isolation thermique obtenue n'est pas satisfaisante ou insuffisamment efficace.

La présente invention a pour but de proposer une nouvelle structure d'isolation thermique pour conduites, qui permet d'éviter l'effet de voûte, d'assurer une bonne isolation thermique et d'être facilement montée dans une conduite tout en ne nécessitant pas une machine d'enroulement encombrante et onéreuse comme une spiraleuse.

Un objet de la présente invention est une conduite calorifugée pour le transport de fluides comportant une structure d'isolation thermique disposée autour d'un noyau central, et elle est caractérisée en ce que la structure d'isolation thermique comprend au moins une couche constituée de profilés pleins distincts, chaque profilé étant enroulé avec un pas très long et un angle d'enroulement maximum inférieur à 30° autour dudit noyau.

Un avantage de la présente invention est qu'on peut utiliser des profilés dont l'épaisseur est plus importante tout en assurant, d'une part, une bonne transmission de la force d'application des tensionneurs au noyau central et, d'autre part, une bonne isolation thermique. Cela vient du fait que le rayon osculateur des profilés sur le noyau central est beaucoup plus grand, en raison du pas d'enroulement relativement important desdits profilés, que le rayon osculateur de bandes ou de tubes à faible pas d'enroulement. De ce fait, il n'est plus nécessaire d'enrouler un grand nombre de couches isolantes autour du noyau central.

Une autre caractéristique de l'invention est que les profilés sont enroulés suivant une configuration en S/Z. Cela permet d'utiliser une machine d'enroulement qui est beaucoup moins coûteuse qu'une spiraleuse.

Une autre caractéristique de l'invention réside dans le fait que les faces radialement opposées de chaque profilé sont non planes et, de préférence, légèrement courbes, de façon que la face inférieure de chaque profilé s'adapte bien à la courbure du noyau central.

Dans une autre forme de réalisation du profilé, ce dernier présente des faces latérales qui peuvent s'imbriquer au moins partiellement dans les faces latérales du profilé consécutif, de manière à améliorer la cohésion de la couche constituée par les profilés juxtaposés et à éviter les ponts thermiques entre spires.

D'autres avantages et caractéristiques ressortiront mieux à la lecture de la description de plusieurs modes de réalisation préférés de l'invention, ainsi que des dessins annexés sur lesquels :
- la figure 1 est une vue en perspective, partiellement arrachée, d'une conduite munie d'une structure d'isolation thermique selon un premier mode de réalisation de l'invention ;
- la figure 2 est une vue schématique en coupe d'une conduite munie d'une isolation thermique constituée par deux couches de profilés ;
- les figures 3a à 3f représentent schématiquement diverses sections du profilé selon les figures 1 ou 2.

Une conduite rigide ou flexible comprend un noyau central constitué par des éléments disposés concentriquement les uns au-dessus des autres. Suivant la nature de l'élément le plus interne du noyau central, la conduite est dite, selon la terminologie anglo-saxonne, "Smooth-bore" lorsque l'élément le plus interne est une gaine polymérique et, dans ce cas, elle est recouverte par une voûte de pression réalisée par enroulement à pas court, de l'ordre de 70 à 80°, d'un fil de forme agrafé ou non ; elle est dite "rough-bore" lorsque l'élément le plus interne est constitué par une carcasse métallique, également constituée par un fil enroulé à pas court, et entourée par une gaine polymérique. Dans les deux types de conduites, des nappes d'armures de traction sont enroulées autour de la couche inférieure adjacente, généralement une gaine polymérique intermédiaire. La conduite comprend au moins deux nappes d'armures dont les sens d'enroulement sont opposés et avec des angles d'armage appropriés. Une gaine d'étanchéité externe est prévue comme dernière couche. La structure de telles conduites est bien connue et on peut se reporter utilement aux nombreux brevets et publications publiés au nom de la demanderesse qui fabrique des conduites rigides et flexibles depuis des décennies.

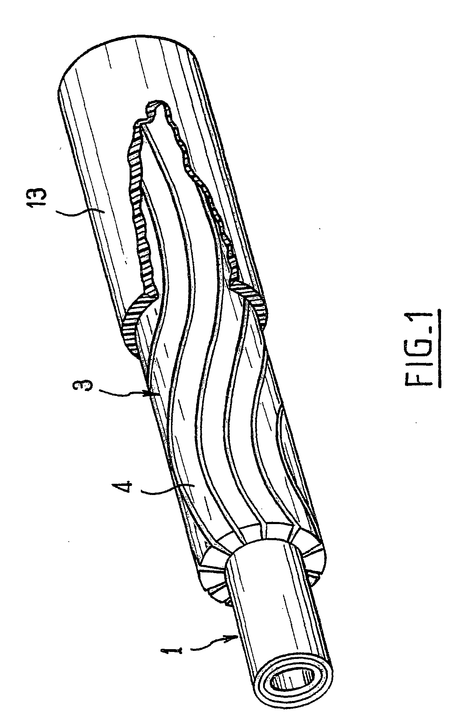

Sur la figure 1, il est représenté un noyau central 1 d'axe longitudinal, tout autour duquel une structure d'isolation thermique est disposée. La structure d'isolation thermique comprend au moins une couche 3 constituée par des profilés pleins 4 qui sont distincts les uns des autres. Chaque profilé 4 est enroulé sur le noyau central 1 avec un pas très long et un angle d'armage compris entre 20 et 30°, et de préférence avec un angle d'armage proche de 20° sur l'axe longitudinal dudit noyau central 1. Chaque profilé est enroulé suivant un enroulement en hélice à pas inversé du type S/Z allongé, ainsi que cela est représenté sur la figure 1.

Bien entendu, l'enroulement de chaque profilé 4 peut être en hélice à pas constant mais toujours avec un angle d'enroulement ou d'armage inférieur à 30° sur l'axe longitudinal dudit noyau central 1.

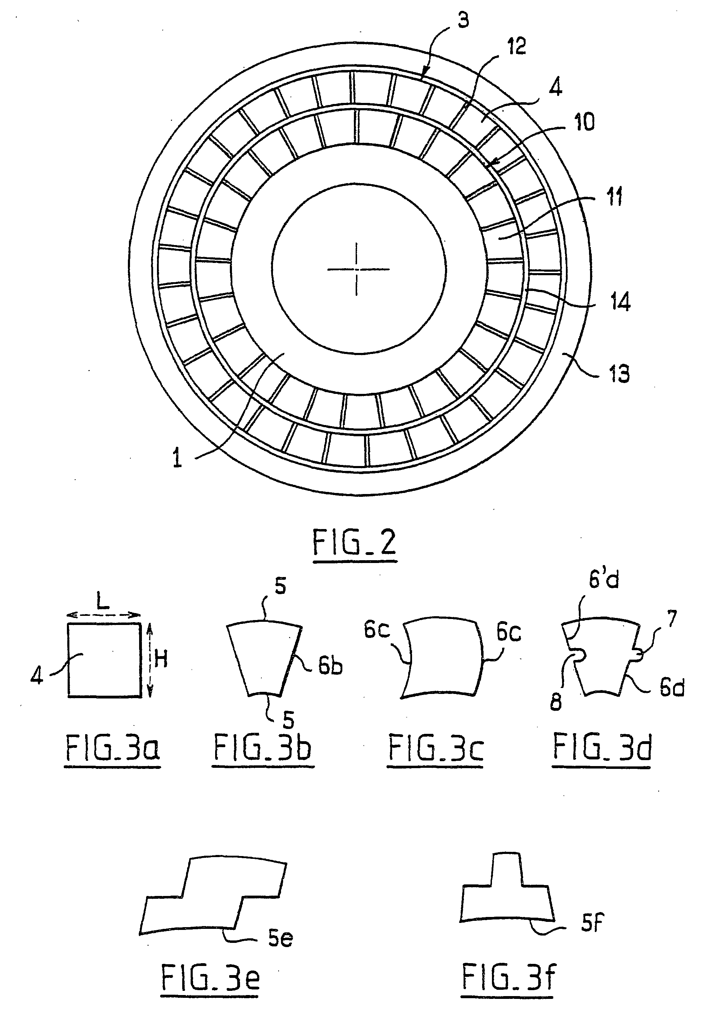

La section droite des profilés 4 peut être polygonale ou affecter d'autres formes telles que celles qui sont représentées sur les figures 3a à 3f. La figure 3a représente une section carrée du profilé 4 bien qu'on puisse adopter également une section rectangulaire ou trapézoïdale pour autant que les dimensions qui seront précisées ci-après sont respectées.

De manière à améliorer le contact des profilés 4 sur la couche la plus externe du noyau central 1, généralement une gaine polymérique, il est préférable que les faces radialement opposées des profilés soient non planes ou qu'à tout le moins la face inférieure 5 qui est en regard de la dernière couche 10 du noyau central soit légèrement courbe.

Les profilés 4 peuvent en outre présenter des faces latérales qui permettent un meilleur contact ou une imbrication entre eux. La section du profilé représentée sur la figure 3b comprend des faces radialement opposées 5 qui sont courbes et des faces latérales 6b droites alors que la section de la figure 3c comprend des faces radialement opposées et des faces latérales 6c courbes. Sur la figure 3d, la section du profilé 4 comprend sur une face latérale 6d une nervure 7 et sur la face latérale opposée 6'd une rainure 8 de sorte que, lorsque deux profilés 4 sont enroulés côte à côte, ils puissent s'imbriquer l'un dans l'autre par une pénétration de la nervure 7 d'un des profilés dans la rainure 8 de l'autre profilé.

Suivant une autre forme de réalisation des profilés 4, il peut être utilisé une section en Z ou en T ainsi que cela est représenté sur les figures 3e et 3f, lesquelles sections présentent également l'avantage de bien s'imbriquer entre elles. De plus, au moins les faces inférieures 5e et 5f sont avantageusement courbes pour assurer un bon contact avec le noyau central. Bien entendu, les faces radiales opposées aux faces inférieures 5e et 5f peuvent être droites ou courbes.

La structure d'isolation thermique représentée sur la figure 2 comprend deux couches 3 et 10, chacune étant constituée par des profilés 4 et 11 qui peuvent être identiques ou non et présenter des sections droites telles que celles représentées sur les figures 3a à 3f.

Les couches 3 et 10 sont enroulées à pas croisés ou inversés, comme les paires d'armures de traction. Suivant une autre configuration, les profilés 11 de la couche 10 sont disposés en chevauchement par rapport aux profilés 4 de la couche 3, c'est-à-dire que chaque profilé 11 de la couche 10 est à cheval sur deux profilés consécutifs 4 de la couche inférieure 3 ou encore que chaque profilé 11 recouvre le déjoint 12 situé entre deux profilés consécutifs 4.

De plus, dans le cas d'une structure d'isolation multicouches, il est possible de disposer éventuellement une bande adhésive 14 de maintien entre deux couches successives ainsi que cela est représenté sur la figure 2.

La structure d'isolation thermique selon l'invention, qu'elle soit monocouche ou multicouches, est terminée par une gaine de protection polymérique 13.

Chaque profilé 4 et/ou 11 présente une hauteur H comprise entre 15 et 100 mm et une largeur L telle que le rapport H/L soit compris entre 0,2 et 2 et de préférence compris entre 0,7 et 1,2.

Les profilés 4 et/ou 11 sont pleins et réalisés dans une matière plastique telle que le PVCC ou une mousse syntactique à base d'élastomère, ladite matière plastique présentant une contrainte à la compression compatible avec la profondeur d'eau dans laquelle la conduite flexible selon l'invention est utilisée, et une conductivité thermique inférieure ou égale à 0,25 W/m.°K.

Pour des profondeurs sensiblement de l'ordre de 400 mètres, la contrainte à la compression de la matière plastique utilisée sera de l'ordre de 4 MPa à température ambiante et pour une déformation égale à 10 %.

Lorsque l'isolation thermique selon l'invention comprend un certain nombre de profilés enroulés les uns sur les autres et formant des ensembles de couches successives de profilés, chaque ensemble comprenant alors plusieurs couches de profilés, il peut arriver que des profilés présentent des caractéristiques mécaniques trop faibles pour transmettre, sans détérioration, les forces exercées par les moyens de pose tels que les tensionneurs. Dans ce cas, selon l'invention, on intercale dans chaque ensemble de couches un ou plusieurs enroulements de profilés qui présentent des caractéristiques mécaniques élevées telle qu'une forte résistance à la compression, de manière à améliorer la transmission des forces appliquées par les moyens de pose sur la conduite flexible.

## Revendications

1. Conduite calorifugée pour le transport de fluides comportant une structure d'isolation thermique disposée autour d'un noyau central (1) d'axe longitudinal, **caractérisée en ce que** la structure d'isolation thermique comprend au moins une couche (3) constituée de profilés pleins distincts (4), chaque profilé étant enroulé avec un pas très long et un angle d'enroulement maximum inférieur à 30° sur l'axe longitudinal.

2. Conduite selon la revendication 1, **caractérisée en ce que** le profilé (4, 11) est enroulé suivant une configuration en S/Z.

3. Conduite selon la revendication 1, **caractérisée en ce que** le profilé (4,11) est enroulé en hélice à pas constant.

4. Conduite selon la revendication 1, **caractérisée en ce que** la structure d'isolation thermique comprend au moins deux couches (3, 10) de profilés (4, 11) superposées, les profilés (4) de la couche de dessus (3) étant disposés en chevauchement sur les profilés (11) de la couche de dessous (10).

5. Conduite selon l'une des revendications 1 à 4, **caractérisée en ce que** chaque profilé (4, 11) présente une section polygonale ayant une hauteur H comprise entre 15 et 100 mm et une largeur L telle que le rapport H/L soit compris entre 0,2 et 2.

6. Conduite selon l'une des revendications 1 à 5, **caractérisée en ce que** les profilés (4, 11) présentent des faces (5) radialement opposées non planes.

7. Conduite selon l'une des revendications 1 à 6, **caractérisée en ce que** les profilés présentent des faces latérales (6) opposées non planes.

8. Conduite selon l'une des revendications 1 à 7, **caractérisée en ce que** les profilés (4, 11) présentent une section en Z ou T.

9. Conduite selon l'une des revendications 1 à 8, **caractérisée en ce que** les profilés (4, 11) sont réalisés en une matière plastique telle que le PVCC ou une mousse syntactique à base d'élastomère.

10. Conduite selon la revendication 9, **caractérisé en ce que** la matière plastique présente une conductivité thermique inférieure ou égale à 0,25 W/m.°K.

11. Conduite selon la revendication 7 ou 8, **caractérisée en ce que** les faces latérales des profilés sont imbriquables au moins partiellement l'une dans l'autre.

12. Conduite selon la revendication 2 ou 3, **caractérisée en ce qu'**au moins une bande adhésive (14) est disposée entre deux couches superposées (3, 10).

13. Conduite selon la revendication 1, **caractérisée en ce qu'**elle comprend des couches de profilées enroulées les unes sur les autres et dont au moins certaines sont constituées par des enroulements de profilés (4) présentant des caractéristiques mécaniques relativement faibles et **en ce qu'**au moins une desdites couches est constituée par un enroulement de profilés (4) présentant des caractéristiques mécaniques élevées pour transmettre de manière appropriée des forces appliquées par des moyens de pose sur ladite conduite.

## Patentansprüche

1. Wärmedämmende Rohrleitung für den Transport von Fluiden, die eine Wärmeisolationsstruktur aufweist, die um einen zentralen Kern (1) mit longitudinaler Achse angeordnet ist, **dadurch gekennzeichnet, daß** die Wärmeisolationsstruktur wenigstens eine Lage (3) aufweist, die aus verschiedenen Vollprofilen (4) gebildet ist, wobei jedes Profil mit einer sehr langen Schrittweite und mit einem maximalen Wicklungswinkel von weniger als 30° in bezug auf die longitudinale Achse gewickelt ist.

2. Rohrleitung nach Anspruch 1, **dadurch gekennzeichnet, daß** das Profil (4, 11) in einer S/Z-Konfiguration gewickelt ist.

3. Rohrleitung nach Anspruch 1, **dadurch gekennzeichnet, daß** das Profil (4, 11) schraubenlinienförmig mit konstanter Schrittweite gewickelt ist.

4. Rohrleitung nach Anspruch 1, **dadurch gekennzeichnet, daß** die Wärmeisolationsstruktur wenigstens zwei Lagen (3, 10) aus übereinanderliegenden Profilen (4, 11) aufweist, wobei die Profile (4) der oberen Lage (3) mit den Profilen (11) der unteren Lage (10) überlappend angeordnet sind.

5. Rohrleitung nach einem der Ansprüche 1 bis 4, **dadurch gekennzeichnet, daß** jedes Profil (4, 11) einen polygonförmigen Querschnitt aufweist, der eine Höhe H im Bereich von 15 bis 100 mm und eine Breite L, derart, daß das Verhältnis H/L im Bereich von 0,2 bis 2 liegt, besitzt.

6. Rohrleitung nach einem der Ansprüche 1 bis 5, **dadurch gekennzeichnet, daß** die Profile (4, 11) radial gegenüberliegende Flächen (5) aufweisen, die nicht eben sind.

7. Rohrleitung nach einem der Ansprüche 1 bis 6, **dadurch gekennzeichnet, daß** die Profile gegenüberliegende Seitenflächen (6) aufweisen, die nicht eben sind.

8. Rohrleitung nach einem der Ansprüche 1 bis 7, **dadurch gekennzeichnet, daß** die Profile (4, 11) einen Z- oder T-Querschnitt aufweisen.

9. Rohrleitung nach einem der Ansprüche 1 bis 8, **dadurch gekennzeichnet, daß** die Profile aus einem Kunststoff wie etwa PVCC oder aus einem syntaktischen Schaum auf elastomerer Basis hergestellt sind.

10. Rohrleitung nach Anspruch 9, **dadurch gekennzeichnet, daß** der Kunststoff eine Wärmeleitfähigkeit besitzt, die kleiner oder gleich 0,25 W/m · °K ist.

11. Rohrleitung nach Anspruch 7 oder 8, **dadurch gekennzeichnet, daß** die Seitenflächen der Profile wenigstens teilweise ineinander verschachtelt werden können.

12. Rohrleitung nach Anspruch 2 oder 3, **dadurch gekennzeichnet, daß** wenigstens ein Klebeband (14) zwischen zwei übereinanderliegenden Lagen (3, 10) angeordnet ist.

13. Rohrleitung nach Anspruch 1, **dadurch gekennzeichnet, daß** sie Lagen aus Profilen aufweist, die übereinandergewickelt sind und wovon wenigstens bestimmte durch Profilwicklungen (4) gebildet sind, die verhältnismäßig schwache mechanische Eigenschaften besitzen, und daß wenigstens eine der Lagen durch eine Profilwicklung (4) gebildet ist, die starke mechanische Eigenschaften besitzt, um Kräfte, die durch Verlegungsmittel auf die Rohrleitung ausgeübt werden, in geeigneter Weise zu übertragen.

## Claims

1. Lagged pipe for transporting fluids having a thermal insulation structure placed around a central core (1) of longitudinal axis, **characterized in that** the thermal insulaton structure comprises at least one layer (3) consisting of separate solid strips (4), each strip being wound with a very long pitch and a maximum wind angle to the horizontal axis of less than 30° .

2. Pipe according to Claim 1, **characterized in that** the strip (4, 11) is wound in an S/Z configuration.

3. Pipe according to Claim 1, **characterized in that** the strip (4, 11) is wound in helix of contstant pitch.

4. Pipe according to Claim 1, **characterized in that** the thermal insulation structure comprises at least two superposed layers (3, 10) of strips (4, 11), the strips (4) of the top layer (3) being placed so that they overlap on the strips (11) of the underlayer (10).

5. Pipe according to one of Claims 1 to 4, **characterized in that** each strip (4, 11) has a polygonal cross section with a height H of between 15 and 100 mm and a width L such that the ratio H/L is between 0.2 and 2.

6. Pipe according to one of Claims 1 to 5, **characterized in that** the strips (4, 11) have non-planar radially opposed faces (5).

7. Pipe according to one of Claims 1 to 6, **characterized in that** the strips have non-planar opposed lateral faces (6).

8. Pipe according to one of Claims 1 to 7, **characterized in that** the strips (4, 11) have a Z-shaped or T-shaped cross section.

9. Pipe according to one of Claims 1 to 8, **characterized in that** the strips (4, 11) are made of a plastic such as CPVC or an elastomer-based syntactic foam.

10. Pipe according to Claim 9, **characterized in that** the plastic has a thermal conductivity of 0.25 W/m.K or less.

11. Pipe according to Claim 7 or 8, **characterized in that** the lateral faces of the strips can be at least partially imbricated in each other.

12. Pipe according to Claim 2 or 3, **characterized in that** at least one adhesive band (14) is placed between two superposed layers (3, 10).

13. Pipe according to Claim 1, **characterized in that** it comprises layers of strips wound over each other and at least some of the layers are formed by windings of strips (4) having relatively poor mechanical properties and **in that** at least one of the said layers is formed by a winding of strips (4) having good mechanical properties in order to transfer, in an appropriate manner, forces applied to the said pipe by laying means.
